# EUROPEAN PATENT SPECIFICATION

(11) **EP 1 045 339 B1**
(45) Date of publication and mention of the grant of the patent: **08.05.2002**
(21) Application number: 00303059.0
(22) Date of filing: 11.04.2000
(51) Int. Cl.: G06T 3/40

(54) **Digital display control**
Digitale Anzeigesteuerung
Contrôle d'affichage numérique

(30) Priority: 13.04.1999 GB 9908292
(43) Date of publication of application: 18.10.2000
(73) Proprietor: Pace Micro Technology Ltd, Saltaire, Shipley BD18 3LF (GB)
(72) Inventor: Nooralahiyan, Amir, Bramhope, LS 16 9BE (GB)
(74) Representative: Wood, Graham

(56) References cited:
- EP-A- 0 811 950
- US-A- 5 442 410
- US-A- 5 610 653

## Description

The invention to which this application relates is a means and system of allowing the manipulation of an element or portion of a visual display of a type which is viewed on a display screen, typically, but not exclusively, on a television set or monitor and relates to a broadcast television programme.

The broadcast of television programmes can now be performed in many different manners such as via satellite transmission, terrestrial transmission or cable transmission. In each case the transmission of the data for the broadcast and other services relating to television programmes is improved by using digital data and the processing of the data in a digital form and this method and system is increasingly used throughout the world. In these systems a broadcast data receiver is typically provided as a device to be connected to the television or monitor screen or as a device which is provided as an integral part of the screen apparatus. In either case, the receiver receives the transmitted digital data, decodes the data and generates a series of frames of video data for display on the television or monitor screen.

The provision of the broadcast data receiver allows the viewer to control certain features of the visual display and it is to the ability to control the display to which this patent application is directed.

It is known to be able to control displays of video cameras or close circuit television systems to cause the cameras to "zoom" in on specific features and it is known to allow a viewer of a display, which is generated as a result of processing data transmitted from and controlled by a remote source, to select a portion of that display for redisplay at a different scale factor such as in US-5610653 which allows the selection of specific portions of a display using user selectable buttons. The display is thus directly displayed without any further processing to improve the display of the portion.

It is an aim of the invention to allow a viewer to select a portion of a television broadcast video display and generate a view of the same which is of greater, or lesser scale than the portion when originally displayed and importantly to allow the generation of the same with improved visual characteristics.

In a first aspect of the invention there is provided a method for generating a display on a television or monitor screen, said method comprising the steps of;
generating a first screen display via a broadcast data receiver resulting from the processing and decoding of digital data including video content received from a remote source;
receiving a signal to freeze the display from a control means operable by the viewer;
receiving a signal designating a portion of the display from a control means operable by the viewer;
and identifying and reprocessing the data for the selected portion to generate an on screen display of the selected portion to a designated scale and characterised in that the portion of the display when selected is re-sized to match the existing aspect ratio of the display and the re-sized portion is processed using one or more image processing algorithms to visually enhance the selected portion followed by the mapping of the portion data to an image buffer in the receiver prior to the display of the said portion.

Typically the identification and reprocessing of the appropriate data takes place within the broadcast data receiver.

In one embodiment the designated scale is selected by the viewer from a series of options which can be displayed on screen in one embodiment, or alternatively, can be any scale selectable by the viewer or alternatively is selected by the broadcast data receiver processing means to provide the best fit of the selected portion on the display screen.

In one embodiment the processing means need not be an integral part of the receiver but can be connected thereto and/or to the television or monitor screen.

The image processing algorithms which are used can be any or any combination of convolution filtering, edge detection, digital image transforms and region segmentation and shape analysis algorithms.

The use of the system in accordance with the invention allows, in a preferred embodiment, for the enhancement of the quality of the display of the selected portion which is to be shown. Thus, and as is expected to be the case in most instances, the selection of a portion of the display for subsequent display at a larger scale, leads to that portion being processed using algorithms in order to enhance the images so as to improve the definition and detail of the same within that portion. This means that rather than simply altering the scale of the display which may result in a poor quality display, the system in accordance with the present invention includes the processing step of enhancing the images by reprocessing the data received for that portion to improve the appearance and distinctiveness of the images in the selected portion. This can generate a display which is at the required scale and is also of improved quality.

Specific examples of the invention can now be described with reference to the accompanying drawings; wherein
Figure 1 illustrates a display on a television or monitor screen in normal form and the selection of a portion of the same;
Figure 2 illustrates a display of the selected portion from Figure 1 in accordance with the invention.

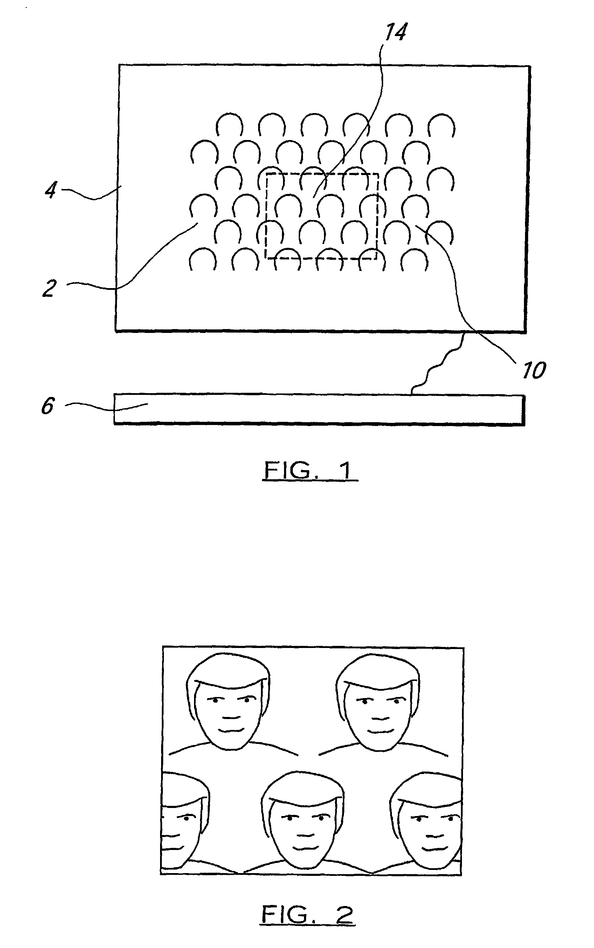

Referring firstly to Figure 1 there is illustrated a display 2 which is generated on a television screen 4. The television is connected to a broadcast data receiver 6 hereinafter referred to as a receiver. The receiver 6 is provided to receive digital data via satellite, cable or terrestrial broadcast systems and which data is decoded by the receiver and includes video, audio and auxiliary data which is used to generate a video display on the screen and audio and teletext or other services as required. The video display comprises a series of successive frames of video generated from the digital data received.

A viewer who views the display may from time to time wish to look at a portion of the display in more detail for a variety of reasons which can include, for example, to ascertain whether in a football match the football crosses the goal line and causes a goal to be scored or not, or, as is illustrated in the accompanying Figures, to allow certain faces in a display of a crowd of people to be studied more clearly.

Referring to Figure 1 there is shown a display comprising a crowd of people 10 as is illustrated. A viewer may know that a certain person is in the crowd or may wish to look at a person or persons in the crowd in more detail. The viewer can be provided with the means as is, for example, described in the applicant's co-pending Patent Application No.GB9900333.7, to freeze the display so that a particular frame remains on screen and the display is not updated or changed. In this condition the viewer can then use a control means which can be of any standard type, such as a computer mouse, or remote control device, to select a portion of the display which is of interest to them by using an outline box which is displayed on screen 14 as indicated.

Having selected the portion the viewer can then select the scale factor to which the selected portion is to be displayed, at random, or from a series of scale factor options, or the receiver may be preprogrammed to change the selected portion to a scale factor to provide the best fit of the selected portion across the display screen 4.

In any case, the receiver processing means then accesses the data from which the selected portion was initially generated and which will be held in a memory in the receiver and then reprocesses the data to allow the portion to be resized to the aspect ratio of the display and uses any or any combination of image processing algorithms as previously mentioned as being an important feature of a practical embodiment of the invention. The use of these algorithms in the reprocessing can cause the images in the selected portion to be enhanced and be more easily identifiable. When this processing step is completed, the display of the selected portion is generated at the required scale factor on the display screen as shown in Figure 2 which then allows the viewer to look at the display of the portion at a larger, or smaller, scale as they require.

It is envisaged that the processing of the selected area is best performed by the receiver processing means. It is envisaged that to allow the system of the invention to be performed, an extra processing layer in the video graphics processor will be required in comparison to the conventional receiver video graphics processor. The computational power required to allow the algorithms to be used to process the selected display portion can be accommodated within the processing functions of the receiver without noticeable delays and thus allows the processing of the selected portion to take place in real time in accordance with the viewers received instructions.

Thus the present invention provides the ability to the viewer to select from a video display generated via broadcast transmitted data, a portion of the display at any instant and to select to display that portion at a different scale to that at which it was originally displayed, so that a portion which may have occupied a relatively small part of the original display can be selected to be displayed over the entire display screen. Furthermore the use of the image processing of the selected portion prior to the display of the same allows for the enhancement of the portion so that the features in the portion can be more distinctive and or distinguishable to the viewer when displayed.

## Claims

1. A method for generating a display (2) on a television or monitor screen (4), said method comprising the steps of;
generating a first screen display (10) via a broadcast data receiver (6) resulting from the processing and decoding of digital data including video content received from a remote source;
receiving a signal to freeze the display from a control means operable by the viewer;
receiving a signal designating a portion (14) of the display from a control receiver operable by the viewer;
and identifying and reprocessing the data for the selected portion (14) to generate an on screen display of the selected portion to a designated scale and **characterised in that** the portion of the display when selected is re-sized to match the existing aspect ratio of the display and the re-sized portion is processed using one or more image processing algorithms to visually enhance the selected portion followed by the mapping of the portion data to an image buffer in the receiver prior to the display of the said portion.

2. A method according to claim 1 wherein the identification and reprocessing of the appropriate data takes place within the broadcast data receiver (6).

3. A method according to claim 1 wherein the scale of the selected portion display (14) is selected by the user from any of a series of options displayed on screen (4).

4. A method according to claim 1 **characterised in that** the designated scale is input by the viewer via the control means.

5. A method according to claim 1 wherein the designated scale is selected by the receiver processing means to provide the best fit of the selected portion (14) on the display screen (4).

6. A method according to claim 1 wherein the processing means to process the on-screen display for the selected portion is connected to the receiver and/or the television or display screen.

7. A method according to claim 1 wherein the image processing algorithms used are any or any combination of convolution filtering, edge detection, digital image transforms, region segmentation and shape analysis algorithms.

## Patentansprüche

1. Verfahren zum Erzeugen einer Anzeige (2) auf einem Fernseh- oder Monitorbildschirm (4), wobei das genannte Verfahren die folgenden Schritte umfasst:
Erzeugen einer ersten Bildschirmanzeige (10) über einen Rundfunkdatenempfänger (6), die aus der Verarbeitung und Decodierung digitaler Daten resultiert, einschließlich des von einer ortsfernen Quelle empfangenen Bildgehalts;
Empfangen eines Signals zum Festhalten der Anzeige über ein vom Betrachter bedienbares Steuermittel;
Empfangen eines einen Abschnitt (14) der Anzeige kennzeichnenden Signals von einem vom Bediener bedienbaren Steuermittel;
und Identifizieren und Neuverarbeiten der Daten für den gewählten Abschnitt (14) zum Erzeugen einer Bildschirmanzeige des gewählten Abschnitts mit einem bestimmten Maßstab, **dadurch gekennzeichnet, dass** der Abschnitt der Anzeige nach dem Wählen neu dimensioniert wird, so dass er mit dem existierenden Seitenverhältnis der Anzeige übereinstimmt, und der neu dimensionierte Abschnitt mit einem oder mehreren Bildverarbeitungsalgorithmen verarbeitet wird, um den gewählten Abschnitt visuell zu verbessern, gefolgt von der Darstellung der Abschnittsdaten auf einem Bildpuffer in dem Empfänger vor der Anzeige des genannten Abschnitts.

2. Verfahren nach Anspruch 1, bei dem Identifikation und Neuverarbeitung der entsprechenden Daten innerhalb des Rundfunkdatenempfängers (6) stattfinden.

3. Verfahren nach Anspruch 1, bei dem der Maßstab der Anzeige des gewählten Abschnitts (14) vom Benutzer aus einer Reihe von auf dem Bildschirm (4) angezeigten Optionen ausgewählt wird.

4. Verfahren nach Anspruch 1, **dadurch gekennzeichnet, dass** der bezeichnete Maßstab vom Betrachter über das Steuermittel eingegeben wird.

5. Verfahren nach Anspruch 1, bei dem der bezeichnete Maßstab vom Empfängerverarbeitungsmittel so gewählt wird, dass er am besten auf den gewählten Abschnitt (14) auf dem Anzeigebildschirm (4) passt.

6. Verfahren nach Anspruch 1, bei dem das Verarbeitungsmittel zum Verarbeiten der Bildschirmanzeige für den gewählten Abschnitt mit dem Empfänger und/oder dem Fernseh- oder Anzeigebildschirm verbunden ist.

7. Verfahren nach Anspruch 1, bei dem als Bildverarbeitungsalgorithmen beliebige oder eine Kombination aus Faltungsfilterung, Randerkennung, digitalen Bildtransformationen, Bereichssegmentierung und Formanalysealgorithmen verwendet werden.

## Revendications

1. Procédé pour générer un affichage (2) sur un écran de télévision ou de moniteur (4) ledit procédé comprenant les étapes suivantes :
générer un premier affichage sur écran (10) par l'intermédiaire d'un récepteur de données diffusées (6) résultant du traitement et du décodage de données numériques, y compris un contenu vidéo reçu à partir d'une source située à distance ;
recevoir un signal destiné à figer l'affichage à partir d'un moyen de contrôle utilisable par la personne visionnant l'écran ;
recevoir un signal désignant une partie (14) de l'affichage à partir d'un récepteur de contrôle utilisable par la personne visionnant l'écran ;
et identifier et re-traiter les données pour la partie sélectionnée (14) afin de générer un affichage sur écran de la partie sélectionnée selon une échelle désignée, et **caractérisé en ce que** la partie de l'affichage, après sa sélection, est re-dimensionnée afin de correspondre au rapport d'aspect existant de l'affichage, et la partie re-dimensionnée est traitée grâce à un ou plusieurs algorithmes de traitement d'images dans le but d'améliorer la partie sélectionnée sur le plan visuel, cette opération étant suivie d'une mise en correspondance des données de la partie en question vers une mémoire-tampon d'images intégrée au récepteur, avant l'affichage de ladite partie.

2. Procédé, selon la revendication 1, dans lequel l'identification et le re-traitement des données appropriées ont lieu dans le récepteur des données diffusées (6).

3. Procédé, selon la revendication 1, dans lequel l'échelle de l'affichage de la partie sélectionnée (14) est sélectionnée par l'utilisateur à partir d'une série d'options présentées sur écran.

4. Procédé, selon la revendication 1, **caractérisé en ce que** l'échelle désignée est introduite par la personne visionnant l'écran grâce au moyen de contrôle.

5. Procédé, selon la revendication 1, dans lequel l'échelle désignée est sélectionnée par le moyen de traitement du récepteur afin de fournir la meilleure adaptation de la partie sélectionnée (14) sur l'écran d'affichage (4).

6. Procédé, selon la revendication 1, dans lequel le moyen de traitement destiné à traiter l'affichage sur écran pour la partie sélectionnée est connecté sur le récepteur et/ou l'écran de télévision ou du moniteur.

7. Procédé, selon la revendication 1, dans lequel les algorithmes utilisés pour traiter les images peuvent être l'un quelconque des algorithmes ou une combinaison quelconque des algorithmes de filtrage des convolutions, de détection des bords, de transformées des images numériques, de segmentation des régions et d'analyse des formes.
